## Europäisches Patentamt

## European Patent Office

## Office européen des brevets

(19)

(11) Veröffentlichungsnummer: **0 213 428**
**B1**

(12) **EUROPÄISCHE PATENTSCHRIFT**

(45) Veröffentlichungstag der Patentschrift:
29.11.89

(21) Anmeldenummer: 86110762.1

(22) Anmeldetag: 04.08.86

(51) Int. Cl.⁴: **G01T 1/29, H04N 1/20**

(54) Anordung zum Herstellen von Röntgenbildern durch Computer-Radiographie.

(30) Priorität: 16.08.85 DE 3529306

(43) Veröffentlichungstag der Anmeldung:
11.03.87 Patentblatt 87/11

(45) Bekanntmachung des Hinweises auf die Patenterteilung:
29.11.89 Patentblatt 89/48

(84) Benannte Vertragsstaaten:
DE FR

(56) Entgegenhaltungen:
EP-A- 0 112 469
US-A- 4 192 578
US-A- 4 485 302

PATENTS ABSTRACTS OF JAPAN, Band 9,
Nr. 86 (P-349)[1809], 16. April 1985; &
JP-A-59 215 033 (HITACHI SEISAKUSHO
K.K.) 04-12-1984
Idem
PATENTS ABSTRACTS OF JAPAN, Band 9,
Nr. 24 (P-331)[1747], 31. Januar 1985;
JP-A-59 168 943 (MATSUSHITA DENKI SANGYO
K.K.) 22-09-1984

(73) Patentinhaber: Siemens Aktiengesellschaft,
Wittelsbacherplatz 2, D-8000 München 2(DE)

(72) Erfinder: Lange, Gottfried, Dipl.-Phys.,
Dresdnerstrasse 38a, D-8520 Erlangen(DE)
Erfinder: Vieth, Michael, Dipl.-Phys., Holzschuherring 22,
D-8520 Erlangen(DE)

ACTORUM AG

## Beschreibung

Die Erfindung bezieht sich auf eine Anordnung zum Herstellen von Röntgenbildern durch Computer-Radiographie mit einer Aufnahmeeinrichtung, die eine Speicherplatte enthält, und einer Wiedergabeeinrichtung mit einem Bildleser zur Abtastung der photostimulierten Lumineszenz der Speicherplatte mit zwei Lesestrahlen und doppelseitiger Auslesung wie im Anspruch 1 definiert.

Bei der digitalen Computer-Radiographie wird bekanntlich das Bild einer Röntgendurchstrahlung auf einer sogenannten Speicherplatte gespeichert und später von einem Bildleser in digitale elektrische Signale umgewandelt und auf einem Bildschirm sichtbar gemacht. In der Speicherplatte werden die Röntgenstrahlen umgewandelt in elektrische Ladungen. Zu diesem Zweck enthält sie einen Speicherleuchtstoff, der in einem organischen Binder eingegossen und auf einen durchsichtigen Träger, im allgemeinen eine Folie, aufgebracht ist. Der Bildleser wandelt das flächenhafte Muster verschiedener Röntgenintensitäten um in entsprechende elektrische Signale, die über einen Analog-Digital-Wandler einem Bildaufbaurechner zugeführt werden. Nach erneuter Umwandlung in analoge Signale kann das Bild dem Bildschirm zugeführt werden.

Durch eine energiereiche Anregungsstrahlung, insbesondere einen roten Laser, wird die Speicherplatte abgetastet und die photostimulierte Lumineszenz punktweise nacheinander jeweils mit Hilfe eines Lichtleiters einem gemeinsamen Photomultiplier und einem Verstärker zugeführt. Der Laserstrahl wird mit Hilfe einer Optik auf der Speicherplatte fokussiert und mit Hilfe eines Drehspiegels über die Zeile abgelenkt. Die Speicherplatte wird stufenweise relativ zum Fächer des Laserstrahls verschoben, so daß das gesamte Bild zeilenweise vom Laserstrahl abgetastet wird. Zur doppelseitigen Auslese kann auch auf beiden Flachseiten jeweils ein Lichtleiter angeordnet sein (US-PS 4 485 302).

Es ist ferner bekannt, in einer Anordnung zum Herstellen von Röntgen-Bildern ein Substrat zu verwenden, das auf beiden Flachseiten mit einem Speichermaterial versehen ist. Das Substrat besteht aus einem Material, das den niederenergetischen Anteil der Strahlung absorbiert. In dieser Anordnung müssen die verschiedenen Speicherschichten nacheinander ausgelesen werden (europäische Offenlegungsschrift 0 112 469).

Einen guten Wirkungsgrad einer Speicheranordnung erhält man, wenn ein wesentlicher Teil der Röntgenquanten vom Speicherleuchtstoff absorbiert wird. Dazu müßte an sich die Schichtdicke des Speicherleuchtstoffs möglichst groß gewählt werden. Mit einer großen Schichtdicke treten aber Unschärfen auf, die zum einen von der Schrägeinstrahlung der Röntgenstrahlen am Rande der Speicherplatte verursacht werden. Trifft der Röntgenstrahl mit einem Winkel gegenüber der normalen auf die Speicherplatte auf, so erfolgt eine Anregung des Leuchtstoffes des Speicherleuchtschirmes durch den Röntgenstrahl auch senkrecht zur normalen. Dies führt bei einem annähernd punktförmigen Röntgenstrahl zu einer ellipsenförmigen Verformung. Die Verzeichnung ist somit am Rande der Speicherplatte um so größer, je dicker der Speicherleuchtschirm ist.

Ferner entsteht bei der Auslesung der Speicherplatte mit einem sehr feinen Lesestrahl eine Unschärfe durch Verwischung der ausgelesenen Bereiche durch Streuung des Lesestrahls und des angeregten Lichtes im Speicherleuchtstoff, der im allgemeinen aus polykristallinem Material besteht. Diese Streuung ergibt einen Durchmesser, der vom Durchmesser des Lesestrahls erheblich abweicht. Er liegt in der Größenordnung der Schichtdicke des Speicherleuchtstoffes. Die Schichtdicke kann somit nicht beliebig groß gewählt werden. Damit wird aber zugleich der Wirkungsgrad der Speicheranordnung entsprechend begrenzt, so daß die Dosis erhöht werden muß, um beim Auslesen eine ausreichende Helligkeit zu erreichen. Dadurch wird aber die Strahlenbelastung des Patienten in unerwünschter Weise erhöht.

Es ist bekannt, zur Untersuchung des Einflusses der radiographischen Bildqualität auf die diagnostische Genauigkeit eine Doppelfilm-Kassette zu verwenden, die ein Standard-System und ein Low-Dose-System enthält. Die Systeme enthalten Filme und Leuchtschichten mit unterschiedlichen Eigenschaften. In jedem System ist ein Film zwischen zwei Leuchtschichten angeordnet. Die beiden Systeme sind durch eine Bleifolie getrennt. Man erhält somit vom Patienten zwei Bilder mit unterschiedlicher Strahlungsenergie, die zu Subtraktionen von Weichteilen oder Knochen zur besseren Sichtbarmachung dieser Teile weiterverarbeitet werden. Im Low-Dose-System ist das Rauschen erheblich größer und die Bildqualität wird beträchtlich vermindert (Med. Phys. 11, Vol. Nr. 5, Sept./Okt. 1984, S. 646 bis 652).

Der Erfindung liegt nun die Aufgabe zugrunde, eine Röntgendiagnostikeinrichtung der eingangs genannten Art zu schaffen, die diese Probleme löst.

Diese Aufgabe wird erfindungsgemäß gelöst mit den kennzeichnenden Merkmalen des Anspruchs 1. Mit diesem Doppelscanner erhält man einen höheren Wirkungsgrad ohne die Auflösung zu vermindern. Durch den Doppelscanner mit getrennter Anregung und getrennter Auslesung werden die beiden Lesestrahlen so geführt, daß sich ihre Fokuspunkte an der Speicherplatte immer direkt gegenüberliegen und somit keine Unschärfe durch Verschiebung der Strukturen der Bilder auf den beiden Flachseiten entsteht. Durch das erhöhte Schichtvolumen erhält man eine entsprechend erhöhte Absorption. In einer bevorzugten Ausführungsform der Anordnung ist zur doppelseitigen Auslese der Speicherplatte für die Ausleseeinrichtung eine gemeinsame Strahlungsquelle für den Lesestrahl vorgesehen, der in zwei Komponenten zerlegt wird, die dann jeweils für eine der beiden photostimulierbaren Speicherschichten vorgesehen ist.

Zur weiteren Erläuterung der Erfindung wird auf die Zeichnung Bezug genommen, in der verschiedene Ausführungsbeispiele von Anordnungen nach der Erfindung schematisch veranschaulicht sind. Figur 1 zeigt eine Aufnahmeeinrichtung nach dem Stand der Technik. In Figur 2 ist eine Wiedergabeeinrichtung mit einer Doppel-Abtasteinrichtung schematisch veranschaulicht. In den Figuren 3 bis 5 ist jeweils eine besondere Ausführungsform für die Strahlteilung des Lesestrahls dargestellt. Figur 6 zeigt eine Ausführungsform der Vorrichtung mit einer Doppel-Abtasteinrichtung, die einen sogenannten Trommel-Scanner enthält.

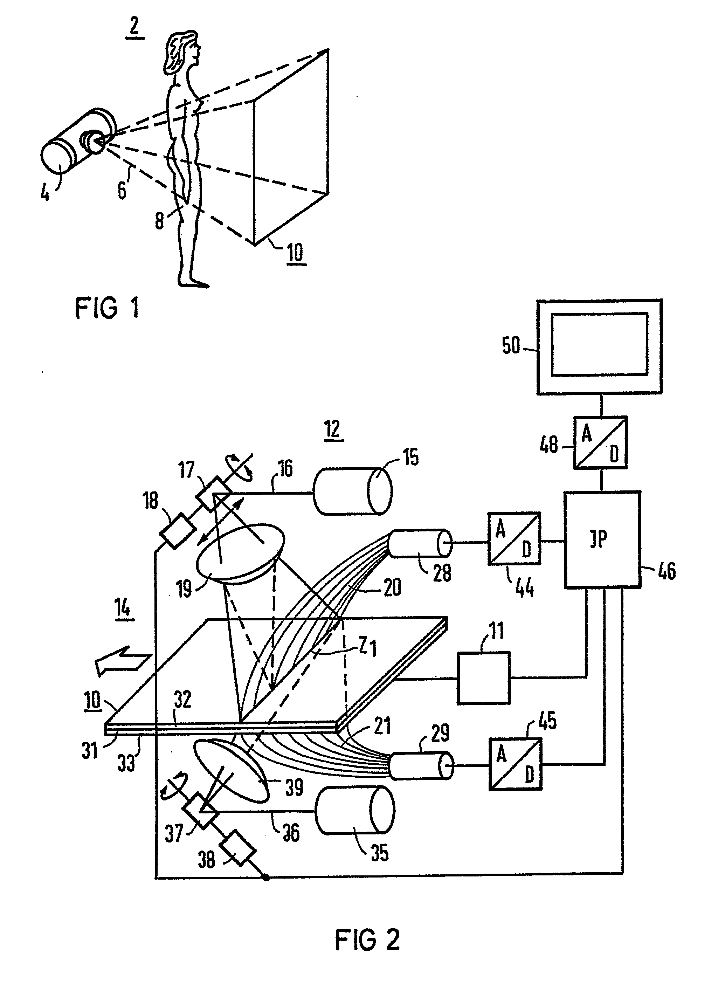

Die bekannte Ausführungsform einer Röntgendiagnostikeinrichtung nach Figur 1 enthält eine Aufnahmeeinrichtung 2 mit einer Röntgenstrahlungsquelle 4, deren Röntgenstrahlen 6 ein Untersuchungsobjekt, beispielsweise einen menschlichen Körper 8, durchsetzen. Die Röntgenstrahlen 6 treffen auf eine sogenannte Speicherplatte 10. Sie besteht im wesentlichen aus einer durchsichtigen Folie, die auf einer Flachseite mit einem photostimulierbaren Leuchtstoff bedeckt ist, der im allgemeinem aus Leuchtphosphor besteht, der in einen organischen Binder eingekleidet ist. Die Speicherplatte 10 erhält das Durchstrahlungsbild des Körpers 8, das mit einer Wiedergabeeinrichtung auf einem Bildschirm sichtbar gemacht oder auch von einem Drucker ausgedruckt werden kann.

In der Ausführungsform der Anordnung zum Herstellen eines Röntgenbildes nach der Erfindung ist in Figur 2 eine Wiedergabeeinrichtung 12 schematisch veranschaulicht, die eine Doppel-Abtasteinrichtung 14 zur doppelseitigen Auslese enthält. In der Ausführungsform nach der Erfindung enthält die Speicherplatte 10 nun einen Träger 31, der für die photostimulierende Lesestrahlung der Doppel-Abtasteinrichtung 14, vorzugsweise eine Laserstrahlung, undurchsichtig ist und auf seinen beiden Flachseiten jeweils mit einer photostimulierbaren Speicherschicht 32 bzw. 33 versehen ist, für die jeweils eine getrennte Anregungsstrahlung und eine getrennte Auslesung vorgesehen ist. Die Dicke der Speicherschichten kann beispielsweise jeweils etwa 100 bis 300 µm betragen. Für besondere diagnostische Ziele kann auch eine unterschiedliche Dicke der Schichten gewählt werden, um Dosisverteilungen, beispielsweise mit unterschiedlicher Kontrast- oder Ortsauflösung, zu erhalten. Die Auslesung eines durch die Röntgenstrahlung 6 eingeprägten Bildmusters erfolgt getrennt für beide Flachseiten. Hierzu kann die Doppelabtasteinrichtung 14 beispielsweise für jede der Flachseiten getrennte Strahlungsquellen für die Lesestrahlung, vorzugsweise Laser, enthalten, die in der Figur mit 15 bzw. 35 bezeichnet sind. Diese Laserstrahlen 16 und 36 sind gleich lang und berühren sich mit ihrem Fokuspunkt im gleichen Punkt des Raumes, um ihre Fokussierung auf beiden Flachseiten des Trägers 31 zu ermöglichen. Sie treffen jeweils auf eine Ablenkeinrichtung, die beispielsweise aus einem Drehspiegel 17 bzw. 37 bestehen können, die jeweils mit einem Antrieb 18 bzw. 38 versehen sind. Die Laserstrahlen 16 bzw. 36 können jeweils mit Hilfe einer als Fokussierungslinse 19 bzw. 39 dargestellten Optik auf einen Punkt einer Bildzeile der Speicherplatte 10 fokussiert und mit Hilfe der Drehspiegel punktweise über die Länge der Bildzeilen abgelenkt werden. In der Figur ist lediglich die Bildzeile an der oberen Flachseite angedeutet und mit $Z_1$ bezeichnet. Die Zuordnung der einzelnen elektrischen Signale aus den Bildpunkten der Bildzeilen erhält man durch eine entsprechende Kopplung eines Bildaufbaurechners 46 sowohl mit den Antrieben 18 und 38 der Drehspiegel als auch mit einem Antrieb 11 für die Bewegung der Speicherplatte 10, die durch einen in der Figur nicht näher bezeichneten Pfeil angedeutet ist.

Die rote Laserstrahlung 16 bzw. 36 löst in den Bildpunkten der Bildzeilen eine blaue Lumineszenzstrahlung aus, die mit Hilfe von Lichtleitern 20 bzw. 21 jeweils einem Photomultiplier 28 bzw. 29 zugeführt und in elektrische Signale umgewandelt wird. Diese elektrischen Signale werden jeweils über einen Analog-Digital-Wandler 44 bzw. 45 einem Computer zugeführt, der als Bildaufbaurechner (image processor, IP) 46 ausgeführt ist und den Bildaufbau übernimmt. Das Bild kann nach Umwandlung der Signale in einem Digital-Analog-Wandler 48 auf dem Bildschirm 50 sichtbar gemacht werden.

In einer weiteren Ausführungsform der Speicherplatte 10 kann der das Lumineszenzmaterial tragende Träger 31 aus einem die Qualität der Röntgenstrahlung beeinflussenden Material, vorzugsweise Metall, insbesondere Blei, Aluminium oder auch Kupfer, bestehen, so daß die in den Speicherschichten 32 und 33 eingeprägten Dosisverteilungen beispielsweise durch unterschiedliche Strahlhärte oder unterschiedliches Spektrum gekennzeichnet sind.

Die von den Detektoren auf beiden Flachseiten der Speicherplatte 10 aufgenommenen Signale können entweder einzeln zum Aufbau eines digitalen Röntgenbildes verwandet werden oder gemeinsam für eine Bildverarbeitung eingesetzt werden, beispielsweise für eine Subtraktion von Bildern zur Kontrastverstärkung an Bildstrukturen.

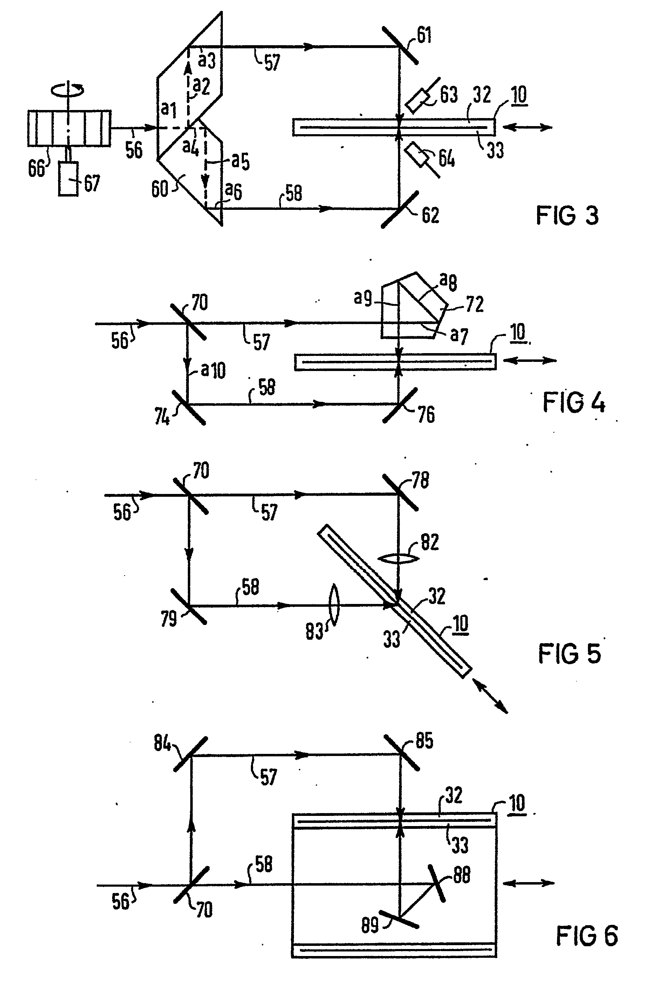

In einer bevorzugten Ausführungsform einer Anordnung gemäß Figur 3 ist für die Wiedergabeeinrichtung 12 eine Doppel-Abtasteinrichtung 14 mit einer gemeinsamen Strahlungsquelle für einen Lesestrahl 56 vorgesehen, der mit Hilfe eines Strahlteilers 60 in zwei Strahlkomponenten 57 und 58 aufgeteilt wird. Als Strahlteiler 60 kann beispielsweise ein Doppelprisma vorgesehen sein, bei dem die Strahlenwege der beiden Komponenten innerhalb des Doppelprismas gleich sind, d.h. der Strahlenweg $a_2 + a_3 = a_4 + a_5 + a_6$ (Durst, Krebs: "2. Int. Conf. opt. Fib. Sens.", Stuttgart 1984, Fig. 4a). Für die beiden Strahlkomponenten 57 und 58 ist jeweils ein Reflektor vorgesehen, der beispielsweise ein Spiegel 61 bzw. 62 sein kann. Die Strahlkomponenten 57 und 58 treffen somit jeweils senkrecht auf die Speicherschichten 32 bzw. 33 der Speicherplatte 10 auf. Für die Aufnahme der photostimulierten Lumineszenz sind Detektoren vorgesehen, die in der Figur mit 63 bzw. 64 bezeichnet sind. Sie können beispielsweise eine zeilenförmige Anordnung von Lichtleitfasern gemäß Figur 2 bilden, die mit dem Photomultiplier 28 bzw. 29 verbunden sind. Die Speicherplatte 10 ist mit einem Antrieb versehen, was in der Figur lediglich durch einen nicht näher bezeichneten Doppelpfeil schematisch angedeutet ist. Zur Zuführung des Laserstrahls 56 zum Strahlteiler 60 kann beispielsweise ein Polygonspiegel 66 vorgesehen sein, der mit einem Antrieb 67 versehen ist. Diese Ausführungsform mit einer gemeinsamen Strahlungsquelle für einen Lesestrahl, der dann in Komponenten zerlegt wird, hat den Vorteil, daß die Synchronisierung der Wiedergabeeinrichtung entsprechend vereinfacht wird.

In der Ausführungsform der Vorrichtung gemäß Figur 4 ist für den Lesestrahl 56 ein halbdurchlässiger Spiegel 70 vorgesehen, der die Aufteilung in die beiden Strahlkomponenten 57 und 58 bewirkt. Für die Strahlkomponente 57 ist ein Pentagonalprisma 72 vorgesehen, während die Strahlkomponente 58 über zwei Spiegel 74 bzw. 76 abgelenkt und der Speicherplatte 10 zugeleitet wird. Das Pentagonalprisma 72 ist so bemessen, daß seine Strahlenwege a7 bis a9 gleich dem Weg a10 der Strahlkomponente 58 sind.

In der Ausführungsform der Vorrichtung gemäß Figur 5 wird der Lesestrahl 56 mit Hilfe des halbdurchlässigen Spiegels 70 in die beiden Komponenten 57 und 58 aufgeteilt, die jeweils mit Hilfe eines Spiegels 78 bzw. 79 der Speicherplatte 10 derart zugeführt werden, daß sich gleiche Strahlenwege für die Strahlkomponenten 57 und 58 ergeben. Die beiden Strahlkomponenten 57 und 58 treffen dann jeweils in einem Winkel von 45° auf die Speicherschichten 32 bzw. 33 auf. Durch die Schrägeinstrahlung der beiden Strahlkomponenten 57 und 58 entsteht jeweils eine elliptische Verzerrung am Auftreffpunkt der Strahlkomponenten. Diese Verzerrung kann beispielsweise jeweils durch eine Zylinderlinse 82 bzw. 83 kompensiert werden.

In der Ausführungsform der Vorrichtung gemäß Figur 6 ist die Speicherplatte 10 als sogenannte Trommelscanner gestaltet, wie er beispielsweise aus SPIE Proc., Vol. 390, S. 70 bis 78, bekannt ist. Abweichend von der bekannten Ausführung sind die innere und äußere Oberfläche der hohlzylindrischen Trommel jeweils mit einer der Speicherschichten 32 bzw. 33 versehen. Der äußeren Speicherschicht 32 wird die Strahlkomponente 57 über den halbdurchlässigen Spiegel 70 und zwei Spiegel 84 bzw. 85 zugeführt. Die Strahlkomponente 58 dient zur Auslese der inneren Speicherschicht 33. Zum Ausgleich der Strahlenwege sind für die Strahlkomponente 58 zwei Spiegel 88 bzw. 89 vorgesehen.

In dieser Ausführungsform als zweistrahliger Trommelscanner ist die beidseitig beschichtete biegbare Speicherplatte 30 beispielsweise an die Innenseite einer nicht dargestellten durchsichtigen Trommel angelegt. Der die strahlformende Optik verlassende Lesestrahl 56 wird am Teilerspiegel 70 in die beiden Strahlkomponenten 57 und 58 zerlegt, die zu den beiden Flachseiten der Speicherplatte 10 gelangen. Hier werden nicht die Strahlkomponenten 57 und 58 bewegt, sondern die Speicherplatte 10 rotiert mit der Trommel um die Mittelachse dieses Hohlzylinders. Die Trommel wird dabei von einem nicht eingezeichneten Motor mit hoher Drehzahl um die Mittelachse gedreht, ein weiterer Motor besorgt eine langsame lineare Bewegung der Trommel in Richtung ihrer Achse, so daß die Speicherplatte 10 wiederum zeilenförmig abgetastet wird. Im Gegensatz zur zeilenförmigen Detektion des emittierten Lichts braucht hier nur ein einziger auf einen Punkt ausgerichteter Detektor eingesetzt zu werden.

## Patentansprüche

1. Anordnung zum Herstellen von Röntgenbildern durch Computer-Radiographie mit einer Aufnahmeeinrichtung (2), die eine Speicherplatte (10) enthält, und einer Wiedergabeeinrichtung (12) mit einem Bildleser (14) zur Abtastung der photostimulierenden Lumineszenz der Speicherplatte (10) mit zwei Lesestrahlen und doppelseitiger Auslesung, wobei die Speicherplatte (10) einen für die Lesestrahlen undurchdringlichen Träger (31) enthält, der auf beiden Flachseiten jeweils mit einer photostimulierbaren Speicherschicht (32, 33) versehen ist, denen eine Doppel-Abtasteinrichtung (14) als Bildleser zur gleichzeitigen Auslesung zugeordnet ist, die für beide Speicherschichten jeweils eine Einrichtung zur Anregung und zur Auslesung enthält.

2. Anordnung nach Anspruch 1, dadurch gekennzeichnet, daß Speicherschichten (32, 33) mit unterschiedlicher Schichtdicke vorgesehen sind.

3. Anordnung nach Anspruch 1 oder 2, dadurch gekennzeichnet, daß Speicherschichten (32, 33) mit unterschiedlichen Speichermaterialien vorgesehen sind.

4. Anordnung nach einem der Ansprüche 1 bis 3, dadurch gekennzeichnet, daß als Träger (31) eine Metallfolie vorgesehen ist.

5. Anordnung nach Anspruch 4, dadurch gekennzeichnet, daß der Träger (31) aus Kupfer oder Eisen oder Blei oder Aluminium besteht.

6. Anordnung nach einem der Ansprüche 1 bis 5, dadurch gekennzeichnet, daß für die Lesestrahlen (57, 58) eine gemeinsame Strahlungsquelle und ein Strahlteiler (60) vorgesehen ist, der einen Lesestrahl (56) in zwei Strahlkomponenten (57, 58) aufteilt.

7. Anordnung nach Anspruch 6, dadurch gekennzeichnet, daß als Strahlteiler (60) ein Doppelprisma vorgesehen ist.

8. Anordnung nach Anspruch 6 oder 7, dadurch gekennzeichnet, daß im Strahlengang einer der Strahlkomponenten (57) ein Pentagonalprisma (72) vorgesehen ist.

9. Anordnung nach Anspruch 6 oder 7, dadurch gekennzeichnet, daß die Speicherplatte (10) jeweils in einem Winkel von 45° zu den beiden auftreffenden Strahlkomponenten (57, 58) angeordnet ist.

10. Anordnung nach Anspruch 9, dadurch gekennzeichnet, daß zum Ausgleich einer elliptischen Strahlverzerrung Zylinderlinsen (82, 83) vorgesehen sind, die im Strahlengang der Strahlkomponenten jeweils in der Nähe der Speicherschichten angeordnet sind.

## Claims

1. Arrangement for the production of X-ray images by means of computer radiography, having a pick-up device (2) which comprises a storage plate (10), and a play-back device (12) with an image reading device (14) for scanning the photo-stimulating luminescence of the storage plate (10) with two reading beams and double-sided signal reading, the storage plate (10) comprising a carrier (31) which is impenetrable to the reading beams, which carrier is provided, on each of its two flat sides, with a storage layer (32, 33) which can be photo-stimulated, to which there is assigned a double scanning device (14) as an image reader for simultaneous signal reading, which scanning device comprises a device for stimulation and for signal reading, for each of the two storage layers.

2. Arrangement according to claim 1, characterised in that storage layers (32, 33) are provided with different layer thicknesses.

3. Arrangement according to claim 1 or 2, characterised in that storage layers (32, 33) are provided with different storage materials.

4. Arrangement according to one of the claims 1 to 3, characterised in that a metal foil is provided as carrier (31).

5. Arrangement according to claim 4, characterised in that the carrier (31) consists of copper or iron or lead or aluminium.

6. Arrangement according to one of the claims 1 to 5, characterised in that a common radiation source and a beam-splitter (60) is (sic) provided for the reading beams (57, 58), which beam-splitter divides a reading beam (56) into two beam components (57, 58).

7. Arrangement according to claim 6, characterised in that a double prism is provided as the beam-splitter (60).

8. Arrangement according to claim 6 or 7, characterised in that a pentagonal prism (72) is provided in the beam path of one of the beam components (57).

9. Arrangement according to claim 6 or 7, characterised in that each storage plate (10) is arranged at an angle of 45° to the two impinging beam components (57, 58).

10. Arrangement according to claim 9, characterised in that there are provided, to compensate for an elliptical beam distortion, cylinder lenses (82, 83) which are arranged in the beam path of the beam components, in each case in the region of the storage layers.

## Revendications

1. Dispositif pour former des radiographies, par la radiographie assistée par ordinateur, comportant un dispositif de prise de vues (2), qui contient une plaque-mémoire (10), et un dispositif de reproduction (12) comportant un lecteur d'images (14) servant à explorer la luminescence, produisant une photostimulation, de la plaque-mémoire (10) au moyen de deux faisceaux de lecture et d'une lecture sur deux faces, la plaque-mémoire (10) contenant un support (31), qui est opaque pour les faisceaux de lecture et est pourvu, sur ses deux faces planes, de couches de stockage respective (32, 33) pouvant être excitées par photostimulation et auquel est associé un dispositif d'exploration double (14), qui est réalisé sous la forme d'un lecteur d'images permettant une lecture simultanée et contient, pour deux couches de stockage, des dispositifs respectifs d'excitation et de lecture.

2. Dispositif suivant la revendication 1, caractérisé par le fait qu'il est prévu des couches de stockage (32, 33) possédant des épaisseurs différentes.

3. Dispositif suivant la revendication 1 ou 2, caractérisé par le fait qu'il est prévu des couches de stockage (32, 33) constituées par des matériaux différents.

4. Dispositif suivant l'une des revendications 1 à 3, caractérisé par le fait qu'il est prévu, comme support (31), une feuille métallique.

5. Dispositif suivant la revendication 4, caractérisé par le fait que le support (32) est formé par du cuivre ou du fer ou du plomb et de l'aluminium.

6. Dispositif suivant l'une des revendications 1 à 5, caractérisé par le fait que, pour les faisceaux de lecture (57, 58), il est prévu une source de rayonnement commun et un diviseur de faisceau (60), qui divise un faisceau de lecture (56) en deux composantes (57, 58).

7. Dispositif suivant la revendication 6, caractérisé par le fait qu'il est prévu, comme diviseur de rayonnement (60), un prisme double.

8. Dispositif suivant la revendication 6 ou 7, caractérisé par le fait qu'un prisme pentagonal (72) est prévu dans le trajet du rayonnement de l'une des composantes de rayonnement (57).

9. Dispositif suivant la revendication 6 ou 7, caractérisé par le fait que la plaque-mémoire (10) est disposée de manière à faire respectivement un angle de 45° par rapport aux deux composantes incidentes de rayonnement (57, 58).

10. Dispositif suivant la revendication 9, caractérisé par le fait que, pour la compensation d'une déformation elliptique du rayonnement, il est prévu des lentilles cylindriques (82, 83), qui sont disposées dans le trajet du rayonnement des composantes de rayonnement, respectivement à proximité des couches de stockage.

FIG 1

FIG 2

FIG 3

FIG 4

FIG 5

FIG 6